# EUROPÄISCHE PATENTSCHRIFT

(11) **EP 2 655 106 B1**
(45) Veröffentlichungstag und Bekanntmachung des Hinweises auf die Patenterteilung: **17.08.2016**
(21) Anmeldenummer: 11808586.9
(22) Anmeldetag: 19.12.2011
(51) Int. Cl.: B60H 1/00

(54) **KRAFTFAHRZEUG MIT EINER KLIMAANLAGE**
MOTOR VEHICLE HAVING AN AIR CONDITIONING SYSTEM
VÉHICULE À MOTEUR MUNI D'UNE INSTALLATION DE CLIMATISATION

(30) Priorität: 24.12.2010 DE 102010056288; 14.01.2011 DE 102011008552
(43) Veröffentlichungstag der Anmeldung: 30.10.2013
(73) Patentinhaber: Volkswagen Aktiengesellschaft, 38436 Wolfsburg (DE)
(72) Erfinder: DRILLER, Sönke, 38518 Gifhorn (DE)
(86) Internationale Anmeldenummer: PCT/EP2011/006407
(87) Internationale Veröffentlichungsnummer: WO 2012/084175

(56) Entgegenhaltungen:
- EP-A1- 2 263 894
- DE-A1- 19 930 148
- FR-A1- 2 936 445
- US-A- 5 586 448

## Beschreibung

Die Erfindung betrifft ein Kraftfahrzeug mit einer Klimaanlage nach dem Oberbegriff des unabhängigen Patentanspruchs, wie offenbart in EP2263894A1.

In der Automobilindustrie wird gegenwärtig gearbeitet an einer gleichzeitigen Lösung des Heizungs- bzw. Klimatisierungsproblems des Fahrzeuginnenraums eines Elektrofahrzeugs sowie des Kühlproblems der wichtigsten elektrischen Komponenten eines derartigen Fahrzeugs, insbesondere Batterie, Leistungselektronik, Elektromaschine einen optimalen Temperaturbereich zu halten, um deren Lebensdauer sowie die Effizienz des Energieeinsatzes in einem derartigen Fahrzeug zu erhöhen.

Zum Heizen und Klimatisieren des Fahrgastraums eines Elektrofahrzeugs ist eine Klimaanlage mit einem Kältekreislauf in Dualfunktion, als Wärmepumpen- sowie Kälteanlagenkreislauf, eine bekannte technische Lösung. Der Kompressor wird hierbei vorzugsweise durch einen Elektromotor angetrieben. Im Wärmepumpenbetrieb kann vorteilhaft auch geheizt werden. Die mit derartigen Klimaanlagen erreichbaren Wirkungsgrade (EER = energy efficiency ratio, COP = coefficient of performance) sind im Verhältnis zu anderen technisch bekannten Lösungen relativ gut.

Derartige Klimaanlagen sind insbesondere deswegen attraktiv, da bei modernen Motorkonzepten weniger Abwärme, die zur Heizung des Fahrgastraums eingesetzt werden kann, produziert wird als früher. Zur Erhöhung der im Wärmepumpenbetrieb zur Verfügung stehenden Temperatur und Wärmemenge kann es dabei vorteilhaft sein, in dem Wärmepumpenkreislauf einen Wärmetauscher einzubinden, der wiederum an eine geeignete Wärmequelle angeschlossen ist.

Aus der DE 602 24 066 T2 ist ein Kraftfahrzeug bekannt, mit einer Vorrichtung zur thermischen Regelung, die eine Wärmepumpe umfasst, wobei ein Kältemittelkreislauf einer Kältequelle Kalorien nimmt, um sie einer Wärmequelle zuzuführen. Die kalte Quelle weist einen ersten und einen zweiten Verdampfer auf, der den Kältemittelkreislauf an einen

### BESTÄTIGUNGSKOPIE

sekundären Wärmeträgerflüssigkeitskreislauf koppelt. Der sekundäre Kreislauf kann an einen ersten sekundären Wärmetauscher und an einen zweiten sekundären Wärmetauscher angeschlossen sein, die jeweils an ein erstes bzw. zweites exothermes Organ angeschlossen sind. Die exothermen Organe können beispielsweise eine Leistungselektronikvorrichtung oder eine Versorgungsbatterie eines Elektromotors des Fahrzeugs darstellen. Aus der DE 103 00 294 A1 ist ein Wärmemanagementsystem für ein Hybridfahrzeug bekannt, mit einem ersten Kühlkreislauf für das Ableiten von Wärme aus einer ersten Wärmequelle, beispielsweise einem Elektromotor, einem Getriebewärmetauscher oder einer Elektronikkühlplatte. Ferner ist ein zweiter Kühlkreislauf für das Ableiten von Wärme aus einer zweiten Wärmequelle, beispielsweise einem Verbrennungsmotor, vorgesehen. Mittels einem Heizerkern erfolgt eine Zuführung von Wärme in einen Fahrgastraum des Hybridfahrzeugs, wobei Ventilmittel vorgesehen sind, die mit dem ersten Kühlkreislauf, dem zweiten Kühlkreislauf und dem Heizerkern in Verbindung stehen. Die Ventilmittel leiten selektiv Kühlmittel von dem ersten Kühlkreislauf und dem zweiten Kühlkreislauf zu dem Heizerkern. Die US 2009/0020620 A1 beschreibt ein Kraftfahrzeug mit einem Motor mit einer niedrigen Abgaswärmeproduktion sowie mit einer Klimaanlage zum Konditionieren der Luft des Fahrzeugraums. Die Klimaanlage umfasst eine reversible Wärmepumpe, die einen Wärmeverteilungskreislauf und einen Abgaskreislauf umfasst, in welchem ein Kältemittel fließen kann. Die reversible Wärmepumpe ist mittels elektromagnetischer Ventile an einen ersten, einen zweiten und einen dritten Wärmetauscher angeschlossen.

Aufgabe der vorliegenden Erfindung ist es, eine Klimatisierung eines Kraftfahrzeugs mit einem Kältemittel durchströmbaren Wärmepumpen- und Kälteanlagenkreislauf zu schaffen und dabei gleichzeitig elektrische Komponenten, wie Batterie, Leistungselektronik oder Elektromaschinen zu temperieren.

Die Aufgabe wird erfindungsgemäß mit den Merkmalen des unabhängigen Patentanspruchs gelöst. Vorteilhafte Ausführungsformen sind den Unteransprüchen zu entnehmen.

Ein erfindungsgemäßes Kraftfahrzeug ist mit einer Klimaanlage mit einem von einem Kältemittel durchströmbaren, als Wärmepumpen- sowie als Kälteanlagenkreislauf ausgebildeten Kältemittelkreislauf und diesem zugeordnet, einem Kompressor, zumindest einem Außenwärmeübertrager, einem Verdampfer und einem Kondensator versehen. Es ist vorgesehen, dass die Klimaanlage mittels eines Kältemittel-/Fluidwärmetauschers thermisch mit einem Fluidkreislauf gekoppelt oder koppelbar ist, der thermisch mit einer Batterie und zumindest einer Wärmequelle gekoppelt oder koppelbar ist, wobei die Batterie und die Wärmequelle mittels von im Fluidkreislauf angeordneten steuerbaren Ventilen unabhängig voneinander thermisch vom Kältemittel-/Fluidwärmetauscher entkoppelbar oder an den Kältemittel-/Fluidwärmetauscher koppelbar sind.

Bei einem weiteren Ausführungsbeispiel der Erfindung ist vorgesehen, dass der Fluid/Kältemittelwärmetauscher an einer Position stromaufwärts der Niederdruckseite des Kompressors thermisch an den Kältemittelkreislauf gekoppelt oder koppelbar ist.

Bei einem weiteren Ausführungsbeispiel der Erfindung ist vorgesehen, dass die Wärme- und / oder Kältequelle zumindest eine Leistungselektronikkomponente und / oder eine Elektromaschine aufweist.

Bei einem weiteren Ausführungsbeispiel der Erfindung ist vorgesehen, dass die Batterie ausgelegt ist für eine maximale Betriebstemperatur von 35 °C ± 15 °C und eine maximale Wärmeabgabe von 1 kW ± 15 kW, zumindest eine Leistungselektronikkomponente ausgelegt ist für eine maximale Betriebstemperatur von maximal 35 °C ± 15 °C und eine maximale Wärmeabgabe von 1 kW ± 0,15 kW sowie die Elektromaschine für eine maximale Betriebstemperatur von 95 °C ± 15 °C und eine maximale Wärmeabgabe von 4 kW ± 0,6 kW.

Bei einem weiteren Ausführungsbeispiel der Erfindung sind Steuerungsmittel vorgesehen, mittels denen in Abhängigkeit von einer Außentemperatur in einem Kältearilagenbetrieb der Fluidkreislauf derart betreibbar ist, dass die Batterie über den Kälteanlagenkreislauf und zumindest eine Wärmequelle über einen Frontendkühler und / oder über einen Klimagerätwärmetauscher kühlbar ist.

Bei einem weiteren Ausführungsbeispiel der Erfindung ist vorgesehen, dass der Fluidkreislauf einen vorzugsweise stromabwärts der Batterie und / oder der zumindest einem der Wärme- und / oder Kältequelle angeordneten Zusatzwärmetauscher, vorzugsweise einen PTC-Wärmetauscher umfasst.

Bei einem weiteren Ausführungsbeispiel der Erfindung ist vorgesehen, dass der Kältemittelkreislauf zumindest einen Innenwärmetauscher aufweist und dass in einem Wärmepumpenbetrieb das Kältemittel von der Hochdruckseite des Kompressors zum Kondensator förderbar ist, vom Kondensator durch ein beidseitig durchströmbares Expansionsorgan zum Innenwärmetauscher förderbar ist, vom Innenwärmetauscher zum Außenwärmetauscher förderbar ist und vom Außenwärmetauscher über den Innenwärmetauscher zur Niederdruckseite des Kompressors förderbar ist und in einem Kälteanlagenbetrieb das Kältemittel von der Hochdruckseite des Kompressors in den Außenwärmetauscher förderbar ist, vom Außenwärmetauscher zum Innenwärmetauscher, vom Innenwärmetauscher über das beidseitig durchströmbare Expansionsorgan zum Verdampfer, vom Verdampfer zum Innenwärmetauscher und vom Innenwärmetauscher zur Niederdruckseite des Kompressors förderbar ist.

Bei einem weiteren Ausführungsbeispiel der Erfindung ist vorgesehen, dass im Kältemittelkreislauf eine Bypassleitung und ein der Bypassleitung zugeordnetes Bypassventil angeordnet ist, mit denen im Wärmepumpenbetrieb der Außenwärmetauscher überbrückbar ist.

Ferner kann im Kältemittelkreislauf eine Bypassleitung und ein der Bypassleitung zugeordnetes Bypassventil angeordnet sein, mit denen im Wärmepumpenbetrieb die Niederdruckseite des Innenwärmetauscher überbrückbar ist.

Weitere Vorteile, Merkmale und Einzelheiten ergeben sich aus der nachfolgenden Beschreibung in der - gegebenenfalls unter Bezug auf die Zeichnung - zumindest ein Ausführungsbeispiel im Einzelnen beschrieben ist. Beschriebene und/oder dargestellte Merkmale bilden für sich oder in beliebiger sinnvoller Kombination die Erfindung, gegebenenfalls auch unabhängig von den Ansprüchen und können insbesondere auch Gegenstand einer oder mehrerer separater Erfindungen sein. Gleiche, ähnliche und/oder zumindest gleiche Teile sind mit Bezugszeichen versehen.

Es zeigen:
- Figur 1: einen als Kälteanlagenkreislauf 1 a ausgebildeten Kältemittelkreislauf,
- Figur 2: einen als Wärmepumpenkreislauf ausgebildeten Kältemittelkreislauf mit einem thermisch mit dem Kältemittelkreislauf gekoppelten Fluidkreislauf.

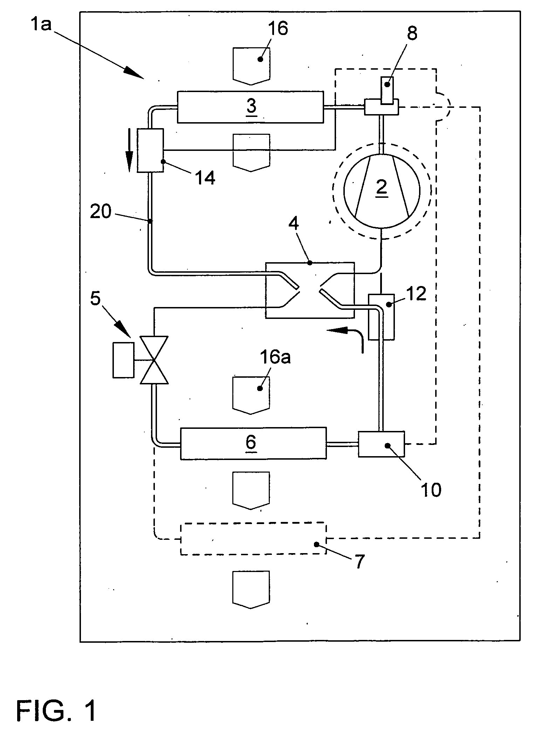

Figur 1 zeigt einen als Kälteanlagenkreislauf 1 a ausgebildeten Kältemittelkreislauf eines nicht näher dargestellten Fahrzeugs, insbesondere eines Elektrofahrzeugs. Der Kältemittelkreislauf ist von einem Kältemittel durchströmbar und dient zum Klimatisieren eines ebenfalls nicht näher dargestellten Innenraums des Fahrzeugs mit einer Klimaanlage. Es versteht sich, dass die einzelnen Komponenten der Klimaanlage sowie des Kältemittelkreislaufs über ein Steuergerät mit dazugehörigen Sensoren, Aktuatoren und elektrischen Anschlüssen gesteuert bzw. geregelt werden. Der Kältemittelkreislauf beinhaltet insbesondere einen Kompressor 2, einen Außenwärmetauscher 3, einen Innenwärmetauscher 4 und ein beidseitig durchströmbares Expansionsorgan 5. Das Kältemittel wird in einer Leitung 20 befördert, wobei mittels eines Dreiwegeventils 8 die Beförderung von Kältemittel von Kompressor 2 zum Außenwärmeübertrager 3 unterbrochen oder zugelassen werden kann. Figur 1 zeigt den Kältemittelkreislauf in einem Kälteanlagenbetrieb, wobei Kältemittel von der Hochdruckseite des Kompressors 2 über das Dreiwegeventil 8 zum Außenwärmetauscher 3 befördert wird und vom Außenwärmetauscher 3 zur Hochdruckseite des Innenwärmetauschers 4 gelangt. Am Außenwärmetauscher 3 vorbei streichende Luft wird erwärmt, wobei das Kältemittel im als Kondensator fungierenden Außenwärmetauscher 3 abkühlt. Vom Innenwärmetauscher 4 gelangt das Kältemittel zum Expansionsorgan 5 und wird zu einem stromabwärts des Expansionsorgans 5 angeordneten Verdampfer 6 befördert, wobei ein Luftstrom 16a abgekühlt werden kann. Das verdampfte Kältemittel gelangt über ein Dreiwegeventil 10 zur Niederdruckseite des inneren Wärmetauschers 4 und gelangt zur Niederdruckseite des Kompressors 2. Die Einbindung des inneren Wärmetauschers 4 in den Kältemittelkreislauf erhöht im Kälteanlagenbetrieb den Wirkungsgrad. Es versteht sich, dass auch Ausführungsformen der Erfindung ohne inneren Wärmetauscher vorstellbar sind.

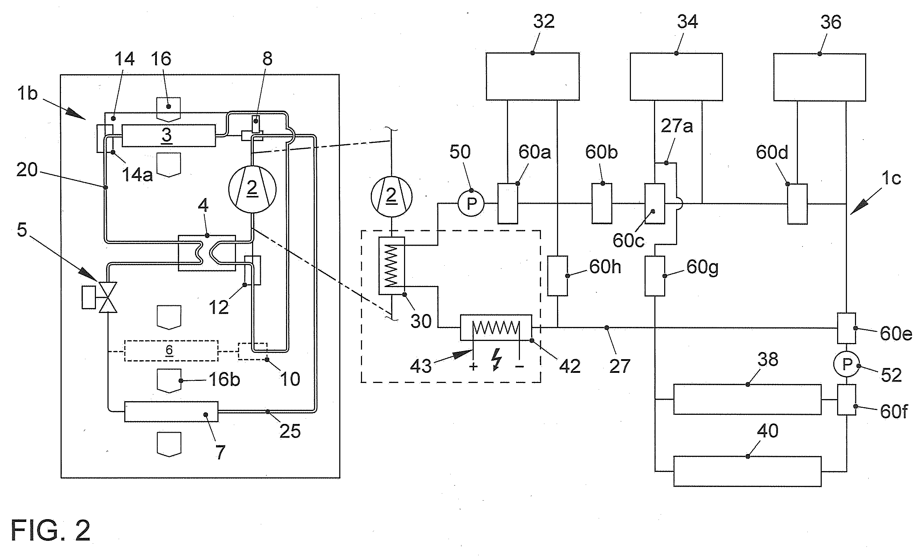

Figur 2 zeigt den als Wärmepumpenkreislauf 1 b ausgebildeten Kältemittelkreislauf im Wärmepumpenbetrieb, wobei zusätzlich noch ein mittels eines Kältemittel-. /Fluidwärmetauschers 30 thermisch mit dem Kältemittelkreislauf verbundener Fluidkreislauf 1 c dargestellt ist, auf den noch später genauer eingegangen wird. Es versteht sich, dass der Fluidkreislauf 1c auch bei der Ausführungsform der Figur 1 vorgesehen ist, jedoch aus Vereinfachungsgründen in der Figur 1 nicht dargestellt ist.

In dem Wärmepumpenbetrieb wird das Kältemittel von der Hochdruckseite des Kompressors 2 in einen stromab des Kompressors 2 im Kältemittelkreislauf angeordneten Kondensator 7 gefördert, wobei kalte Luft 16b erwärmt wird. Von dem Kondensator 7 gelangt das Kältemittel zum beidseitig durchströmbaren Expansionsorgan 5 und von diesem zur Hochdruckseite des inneren Wärmetauschers 4 und zum als Verdampfer fungierenden Außenwärmetauscher 3, von dem es über das Dreiwegeventil 10 zur Niederdruckseite des Innenwärmetauschers 4 und anschließend zur Niederdruckseite des Kompressors 2 gelangt. Im Wärmepumpenbetrieb wird Wärmeenergie aus dem Luftstrom 16 entnommen und kann zu Heizzwecken im Fahrzeug verwendet werden. Bei sehr niedrigen Außentemperaturen die Nutzung der Luft 16 als Wärmequelle 0 geht und ferner in bestimmten Situationen der Wärmetauscher 3 vereisen und daher zur Wärmeübertragung nicht mehr zur Verfügung steht, ist zwischen der Hochdruckseite des Innenwärmetauschers 4 und dem Außenwärmetauscher 3 in der Kältemittelleitung 20 ein als ein vorzugsweise als Dreiwegeventil ausgebildetes Bypassventil 14a vorgesehen, das mit einem Ausgang mit einer Bypassleitung 14 verbunden ist, so dass der Außenwärmetauscher 3 überbrückt werden kann. Ein weiterer Ausgang des Dreiwegeventils 14a ist mit dem Außenwärmeübertrager bzw. dessen Eingang verbunden und ferner ist in der Kältemittelleitung 20 zwischen dem Dreiwegeventil 10 und dem Eingang der Niederdruckseite des inneren Wärmetauschers 4 ein vorzugsweise als Dreiwegeventil ausgebildetes Bypassventil 12a vorgesehen. Ein Ausgang des Dreiwegeventils 12a ist mit einer Bypassleitung 12 verbunden, die wiederum mit der Niederdruckseite des Kompressors 2 verbunden ist. Ein weiterer Ausgang des Dreiwegeventils 12a ist mit einem Eingang der. Niederdruckseite des Innenwärmetauschers 4 verbunden.

Der in Figur 2 dargestellte Fluidkreislauf 1 c, mit dem die Klimaanlage bzw. der Kältemittelkreislauf thermisch über einen Fluid-/Kältemittelwärmetauscher 30 versorgt eine Batterie 32, eine Leistungselektronikkomponente 34 sowie eine Elektromaschine 36. Als Fluid kann beispielsweise eine Glykol-Wasser-Mischung oder ein anders geeignetes Medium verwendet werden. Das Fluid wird in einer Fluidleitung 20 mittels einer Fluidpumpe 50 gefördert.

Typischerweise hat die Batterie eine niedrigere maximale Betriebstemperatur, beispielsweise in einem Bereich von 35 °C ± 15 °C als die Leistungselektronikkomponente 34 mit einer maximalen Betriebstemperatur in einem Bereich von 65 °C ± 15 °C. Ferner hat typischerweise die Elektromaschine eine höhere maximale Betriebstemperatur von 95 °C ± 15 °C. Ferner haben Batterie 32 mit Leistungselektronikkomponente 34 und Elektromaschine 36 unterschiedliche maximale Abwärmeleistungen bei einem Bereich von 1 kW ± 15 für die Batterie und Leistungselektronikkomponente und einem Bereich von 4 kW für die Elektromaschine 36. Ferner sind die Aufheizzeiten der genannten Komponenten typischer Weise unterschiedlich. Damit ist die jeweils mögliche zeitliche Dynamik und maximale Temperaturerhöhung des Fluids 1 c sowie die in das Fluid einzuspeisende maximale Wärmemenge von Batterie 32, Leistungselektronikkomponente 34 und Elektromaschine 36 unterschiedlich, was bei einer Steuerung durch Ventile 60a-h durch die Klimaanlagensteuerung berücksichtigt wird.

Im Fluidkreislauf 1c sind steuerbare Ventile 60a-60h angeordnet, mit denen die Batterie 32 die Leistungselektronikkomponente 34, die Elektromaschine 36 unabhängig voneinander thermisch vom Fluidkreislauf 1 c bzw. Kältemittel-/Fluidwärmetauscher 30 entkoppelt werden können. Ferner können die Batterie 32, die Leistungselektronik 34 und / oder die Elektromaschine 36 auch unabhängig voneinander thermisch an den Fluidkreislauf 1 c bzw. den Kältemittel-/Fluidwärmetauscher 30 angekoppelt werden. Ein Dreiwegeventil 60a ist stromauf der Batterie 32 im Fluidkreislauf 1c angeordnet. Stromaufwärts der Leistungselektronikkomponente 34 ist ein Dreiwegeventil 60c angeordnet. Zwischen den beiden Ventilen 60a und 60c ist ein Ventil 60b angeordnet. Stromabwärts des Ventils 60c und stromaufwärts der Elektromaschine 36 ist ein Dreiwegeventil 60d angeordnet. Stromabwärts der Elektromaschine 36 ist ein Dreiwegeventil 60e angeordnet. Stromabwärts der Batterie 32 ist ein Ventil 60h angeordnet. Stromabwärts des Dreiwegeventils 60e und stromaufwärts der Fluidseite des Kältemittel-/Fluidwärmetauschers 30 ist ein PTC-Wärmetauscher 42 angeordnet, der mittels einer Spannungsquelle 43 mit geringer Verzögerungszeit einen Wärmestrom in den Fluidkreislauf 1 c einbringen und damit zusätzliche Wärmeenergie übe den Kältemittel-/Fluidwärmetauscher 30 den Wärmepumpenkreislauf 1 b einspeisen kann. Ein Abzweig 27a der Fluidleitung 27 ist stromabwärts des Dreiwegeventils 60c und stromaufwärts der Leistungselektronikkomponente 34 vorgesehen und bildet einen Bypass der stromabwärts des Dreiwegeventils 60e und stromaufwärts des Kältemittel/Fluidwärmetauscher 30 mit der Leitung 27 wieder verbunden ist. Im Abzweig ist ein Ventil 60g vorgesehen mit dem der Bypass geöffnet oder geschlossen werden kann.

Die beschriebene Anordnung von Ventilen 60a bis 60h ermöglicht eine Reihenschaltung von Batterie 32, Leistungselektronikkomponente 34 und Elektromaschine 36 im Fluidkreislauf 1 c mit deren selektiver Zu- und Abschltung und damit eine separate Zu- oder Abschaltung einer Förderung des Fluids zu den erwähnten Komponenten.

Der Fluidkreislauf 1 c umfasst ferner einen vorzugsweise im Frontend angeordneten Kühler 38 und / oder einen Wärmetauscher 40 eines Klimageräts, die über die Dreiwegeventile 60e und 60f sowie das Ventil 60g und 60d eine separate oder kombinierte Kühlung von Leistungselektronikkomponente 34 und Elektromaschine 36 ermöglichen. Zur Gewährleistung eines ausreichenden Fluidstroms wird eine weitere Pumpe 42 vorgesehen.

Der Fluidkreislauf 1 c ermöglicht im Kälteanlagenbetrieb eine Kühlung der Batterie 32 sowie der Leistungselektronikkomponenten 34 und 36. Vorteilhaft ist dabei, dass die Batterie über den Kälteanlagenkreislauf 1 a auch dann gekühlt werden kann, wenn aufgrund zu hoher Außentemperaturen eine Kühlung über den Kühler 38 nicht mehr möglich ist. Es versteht sich, dass Steuerungsmittel vorgesehen sind, um in Abhängigkeit von der Außentemperatur die Kühlung der Batterie 32, der Leistungselektronikkomponente 34 und der Elektromaschine 36 in der beschriebenen Art zu bewerkstelligen.

### Bezugszeichenliste

- 1 a: Kälteanlagenkreislauf
- 1 b: Wärmepumpenkreislauf
- 1c: Fluidkreislauf
- 2: Kompressor
- 3: Außenwärmetauscher
- 4: Innenwärmetauscher
- 5: Expansionsorgan
- 6: Verdampfer
- 7: Kondensator
- 8: Ventil
- 10: Ventil
- 12: Bypass
- 12a: Ventil
- 14: Bypass
- 14a: Ventil
- 16a: Luftstrom
- 16b: Luftstrom
- 20: Leitung
- 25: Leitung
- 27: Leitung
- 30: Kältemittel-/Fluidwärmetauscher
- 32: Batterie
- 34: Leistungselektronik
- 36: Elektromaschine
- 38: Kühler
- 40: Klimagerät / Wärmetauscher
- 42: PTC-Wärmetauscher
- 43: Spannungsversorgung
- 50: Pumpe
- 52: Pumpe
- 60a-h: Ventil

## Patentansprüche

1. Kraftfahrzeug mit einer Klimaanlage mit einem von einem Kältemittel durchströmbaren, als Wärmepumpen (1 b) - sowie als Kälteanlagenkreislauf (1a) ausgebildeten Kältemittelkreislauf und diesen zugeordnet, einem Kompressor (2), einem Außenwärmeübertrager (3), einem Verdampfer (6) und einem Kondensator (7), wobei die Klimaanlage mittels eines Fluid/Kältemittelwärmetauschers (30) thermisch mit einem Fluidkreislauf (1c) gekoppelt oder koppelbar ist, der thermisch mit einer Batterie (32) und zumindest einer Wärme- und / oder Kältequelle gekoppelt oder koppelbar ist, wobei die Batterie (32) und die Wärme- und / oder Kältequelle mittels von im Fluidkreislauf (1c) angeordneten steuerbaren Ventilen (60a-60h) unabhängig voneinander thermisch vom Fluid/Kältemittelwärmetauscher (30) entkoppelbar oder an den Fluid/Kältemittelwärmetauscher (30) koppelbar sind und die Wärme- und / oder Kältequelle zumindest eine Leistungselektronikkomponente (34) und / oder eine Elektromaschine (36), einen Frontendkühler (38) und / oder einen Wärmetauscher (40) aufweist, **dadurch gekennzeichnet, dass** die Batterie (32) und zumindest eine Leistungselektronik (34) und / oder Elektromaschine (36) mittels den steuerbaren Ventilen (60a-60h) in einer Reihenschaltung und Parallelschaltung im Fluidkreislauf (1c) angeordnet oder anordenbar sind

2. Kraftfahrzeug nach Anspruch 1, **dadurch gekennzeichnet, dass** der Fluid/Kältemittelwärmetauscher (30) an einer Position stromaufwärts der Niederdruckseite des Kompressors (2) thermisch an den Kältemittelkreislauf gekoppelt oder koppelbar ist.

3. Kraftfahrzeug nach zumindest einem der Ansprüche 1 oder 2, **dadurch gekennzeichnet, dass** die Batterie (32) ausgelegt ist für eine maximale Betriebstemperatur von 35 °C ± 15 °C und eine maximale Wärmeabgabe von 1 kW ± 15 kW, zumindest eine Leistungselektronikkomponente ausgelegt ist für eine maximale Betriebstemperatur von maximal 35 °C ± 15 °C und eine maximale Wärmeabgabe von 1 kW ± 0,15 kW sowie die Elektromaschine (36) für eine maximale Betriebstemperatur von 95 °C ± 15 °C und eine maximale Wärmeabgabe von 4 kW ± 0,6 kW.

4. Kraftfahrzeug nach einem der vorhergehenden Ansprüche, **dadurch gekennzeichnet, dass** Steuerungsmittel vorgesehen sind, mittels denen in Abhängigkeit von einer Außentemperatur in einem Kälteanlagenbetrieb der Fluidkreislauf (1c) derart betreibbar ist, dass die Batterie (32) über den Kälteanlagenkreislauf 1a und zumindest eine Wärmequelle über einen Frontendkühler (38) und / oder über einen Klimagerätwärmetauscher (40) kühlbar ist.

5. Kraftfahrzeug nach einem der vorhergehenden Ansprüche, **dadurch gekennzeichnet, dass** der Fluidkreislauf (1c) einen vorzugsweise stromabwärts der Batterie (32) und / oder der zumindest einen Wärmequelle angeordneten Zusatzwärmetauscher, vorzugsweise einen PTC-Wärmetauscher (42) umfasst.

6. Kraftfahrzeug nach einem der vorhergehenden Ansprüche, **dadurch gekennzeichnet, dass** der Kältemittelkreislauf zumindest einen Innenwärmetauscher (4) aufweist und dass in einem Wärmepumpenbetrieb das Kältemittel von der Hochdruckseite des Kompressors (2) in den Kondensator (7), vom Kondensator (7) durch ein beidseitig durchströmbares Expansionsorgan (5) zum Innenwärmetauscher (4), vom Innenwärmetauscher (4) zum Außenwärmetauscher (3) und vom Außenwärmetauscher (3) über den Innenwärmetauscher (4) zur Niederdruckseite des Kompressors (2) förderbar ist und
in einem Kälteanlagenbetrieb das Kältemittel von der Hochdruckseite des Kompressors (2) zum Außenwärmetauscher (3), vom Außenwärmetauscher (3) zum Innenwärmetauscher (4), vom Innenwärmetauscher (4) über das beidseitig durchströmbare Expansionsorgan (5) zum Verdampfer (6), vom Verdampfer (6) zum Innenwärmetauscher (4) und vom Innenwärmetauscher (4) zur Niederdruckseite des Kompressors (2) förderbar ist.

7. Kraftfahrzeug nach Anspruch 6, **dadurch gekennzeichnet, dass** im Kältemittelkreislauf eine Bypassleitung (14) und ein der Bypassleitung (14) zugeordnetes Bypassventil (14a) angeordnet ist, mit denen im Wärmepumpenbetrieb der Außenwärmetauscher (3) überbrückbar ist.

8. Kraftfahrzeug nach Anspruch 6, **dadurch gekennzeichnet, dass** im Kältemittelkreislauf eine Bypassleitung (12) und ein der Bypassleitung (12) zugeordnetes Bypassventil (12a) angeordnet ist, mit denen im Wärmepumpenbetrieb die Niederdruckseite des Innenwärmetauschers (4) überbrückbar ist.

## Claims

1. Motor vehicle having an air conditioning system with a refrigerant circuit which can be flowed through by a refrigerant and is configured as a heat pump circuit (1b) and as a cooling system circuit (1a), and, assigned to the said circuits, a compressor (2), an exterior heat exchanger (3), an evaporator (6) and a condenser (7), the air conditioning system being coupled or being capable of being coupled thermally by means of a fluid/refrigerant heat exchanger (30) to a fluid circuit (1c) which is coupled or can be coupled thermally to a battery (32) and at least one heat and/or cold source, it being possible for the battery (32) and the heat and/or cold source to be decoupled thermally from the fluid/refrigerant heat exchanger (30) or to be coupled to the fluid/refrigerant heat exchanger (30) independently of one another by means of controllable valves (60a-60h) which are arranged in the fluid circuit (1c), and the heat and/or cold source having at least one electronic power system component (34) and/or an electric machine (36), a front end radiator (38) and/or a heat exchanger (40), **characterized in that** the battery (32) and at least one electronic power system (34) and/or electric machine (36) are arranged or can be arranged in the fluid circuit (1c) in a series circuit and parallel circuit by means of the controllable valves (60a-60h).

2. Motor vehicle according to Claim 1, **characterized in that** the fluid/refrigerant heat exchanger (30) is coupled or can be coupled thermally to the refrigerant circuit at a position upstream of the low pressure side of the compressor (2).

3. Motor vehicle according to at least one of Claims 1 and 2, **characterized in that** the battery (32) is designed for a maximum operating temperature of 35°C ±15°C and a maximum thermal output of 1 kW ±15 kW, at least one electronic power system component is designed for a maximum operating temperature of at most 35°C ±15°C and a maximum thermal output of 1 kW ±0.15 kW, and the electric machine (36) is designed for a maximum operating temperature of 95°C ±15°C and a maximum thermal output of 4 kW ±0.6 kW.

4. Motor vehicle according to one of the preceding claims, **characterized in that** control means are provided, by means of which, in a manner which is dependent on an external temperature, the fluid circuit (1c) can be operated in a cooling system mode in such a way that the battery (32) can be cooled via the cooling system circuit la and at least one heat source can be cooled via a front end radiator (38) and/or via an air conditioning unit heat exchanger (40).

5. Motor vehicle according to one of the preceding claims, **characterized in that** the fluid circuit (1c) comprises an additional heat exchanger, preferably a PTC heat exchanger (42), which is preferably arranged downstream of the battery (32) and/or the at least one heat source.

6. Motor vehicle according to one of the preceding claims, **characterized in that** the refrigerant circuit has at least one interior heat exchanger (4), and **in that**, in a heat pump mode, the refrigerant can be conveyed from the high pressure side of the compressor (2) into the condenser (7), from the condenser (7) through an expansion member (5) which can be flowed through on both sides to the interior heat exchanger (4), from the interior heat exchanger (4) to the exterior heat exchanger (3), and from the exterior heat exchanger (3) via the interior heat exchanger (4) to the low pressure side of the compressor (2), and, in a cooling system mode, the refrigerant can be conveyed from the high pressure side of the compressor (2) to the exterior heat exchanger (3), from the exterior heat exchanger (3) to the interior heat exchanger (4), from the interior heat exchanger (4) via the expansion member (5) which can be flowed through on both sides to the evaporator (6), from the evaporator (6) to the interior heat exchanger (4), and from the interior heat exchanger (4) to the low pressure side of the compressor (2).

7. Motor vehicle according to Claim 6, **characterized in that** a bypass line (14) and a bypass valve (14a) which is assigned to the bypass line (14) are arranged in the refrigerant circuit, by way of which bypass line (14) and bypass valve (14a) the exterior heat exchanger (3) can be bridged in the heat pump mode.

8. Motor vehicle according to Claim 6, **characterized in that** a bypass line (12) and a bypass valve (12a) which is assigned to the bypass line (12) are arranged in the refrigerant circuit, by way of which bypass line (12) and bypass valve (12a) the low pressure side of the interior heat exchanger (4) can be bridged in the heat pump mode.

## Revendications

1. Véhicule automobile muni d'une installation de climatisation avec un circuit d'agent de refroidissement à travers lequel peut circuler un agent de refroidissement et réalisé sous la forme de pompes à chaleur (1b) - ainsi que d'un circuit d'installation de refroidissement (1a) et auquel sont associés un compresseur (2), un échangeur de chaleur externe (3), un évaporateur (6) et un condensateur (7), l'installation de climatisation étant couplée ou pouvant être couplée thermiquement à un circuit de fluide (1c) à l'aide d'un échangeur thermique de fluide/agent de refroidissement (30), ledit circuit étant couplé ou pouvant être couplé thermiquement à une batterie (32) et à au moins une source de chaleur et/ou de froid, la batterie (32) et la source de chaleur et/ou de froid pouvant être découplées thermiquement de l'échangeur thermique de fluide/agent de refroidissement (30) indépendamment l'une de l'autre à l'aide de soupapes (60a-60h) commandables disposées dans le circuit de fluide (1c) ou pouvant être couplées à l'échangeur thermique de fluide/agent de refroidissement (30) et la source de chaleur et/ou de froid comportant au moins un composant électronique de puissance (34) et/ou une machine électrique (36), un refroidisseur d'extrémité avant (38) et/ou un échangeur thermique (40), **caractérisé en ce que** la batterie (32) et au moins un élément électronique de puissance (34) et/ou une machine électrique (36) sont disposés ou peuvent être disposés en série et en parallèle dans le circuit de fluide (1c) à l'aide de soupapes (60a-60h) commandables.

2. Véhicule automobile selon la revendication 1, **caractérisé en ce que** l'échangeur thermique de fluide/agent de refroidissement (30) est couplé thermiquement au circuit d'agent de refroidissement ou peut en être découplé, en une position située vers l'amont du côté de basse pression du compresseur (2).

3. Véhicule automobile selon au moins l'une quelconque des revendications 1 ou 2, **caractérisé en ce que** la batterie (32) est conçue pour une température de fonctionnement maximale de 35 °C ± 15 °C et une émission de chaleur maximale de 1 kW ± 15 kW, au moins un composant électronique de puissance étant conçu pour une température de fonctionnement maximale de tout de plus 35 °C ± 15 °C et une émission de chaleur maximale de 1 kW ± 0,15 kW et la machine électrique (36) étant conçue pour une température de fonctionnement maximale de 95 °C ± 15 °C et une émission de chaleur maximale de 4 kW ± 0,6 kW.

4. Véhicule automobile selon l'une quelconque des revendications précédentes, **caractérisé en ce que** des moyens de commande sont prévus à l'aide desquels le circuit de fluide (1c) peut être entraîné de telle sorte, en fonction d'une température extérieure en situation de fonctionnement de l'installation de refroidissement, que la batterie (32) peut être refroidie via le circuit d'installation de refroidissement (1a) et qu'au moins une source de chaleur peut être refroidie via un refroidisseur d'extrémité avant (38) et/ou via un échangeur thermique de climatiseur (40).

5. Véhicule automobile selon l'une quelconque des revendications précédentes, **caractérisé en ce que** le circuit de fluide (1c) comprend un échangeur thermique supplémentaire, de préférence un échangeur thermique PTC (42), de préférence disposé en aval de la batterie (32) et/ou de l'au moins une source de chaleur.

6. Véhicule automobile selon l'une quelconque des revendications précédentes, **caractérisé en ce que** le circuit d'agent de refroidissement comporte au moins un échangeur thermique interne (4) et que l'agent de refroidissement peut être transporté, en situation de fonctionnement des pompes à chaleur, du côté de haute pression du compresseur (2) jusque dans le condensateur (7), puis du condensateur (7) à travers un organe d'expansion (5) pouvant être traversé des deux côtés jusque dans l'échangeur thermique interne (4), de l'échangeur thermique interne (4) jusqu'à l'échangeur thermique externe (3) et de l'échangeur thermique externe (3) jusqu'au côté de basse pression du compresseur (2) via l'échangeur thermique interne (4) ; et
en situation de fonctionnement de l'installation de refroidissement, l'agent de refroidissement peut être transporté du côté de haute pression du compresseur (2) jusqu'à l'échangeur thermique externe (3), de l'échangeur thermique externe (3) jusqu'à l'échangeur thermique interne (4), de l'échangeur thermique interne (4) jusqu'à l'évaporateur (6) via l'organe d'expansion (5) pouvant être traversé des deux côtés, de l'évaporateur (6) jusqu'à l'échangeur thermique interne (4) et de l'échangeur thermique interne (4) jusqu'au côté de basse pression du compresseur (2).

7. Véhicule automobile selon la revendication 6, **caractérisé en ce qu'**une conduite de contournement (14) et une soupape de contournement (14a) associée à la conduite de contournement (14) sont disposées dans le circuit d'agent de refroidissement, l'échangeur thermique externe (3) pouvant être shunté via lesdits éléments en situation de fonctionnement des pompes à chaleur.

8. Véhicule automobile selon la revendication 6, **caractérisé en ce qu'**une conduite de contournement (12) et une soupape de contournement (12a) associée à la conduite de contournement (12) sont disposées dans le circuit d'agent de refroidissement, le côté de basse pression de l'échangeur thermique interne (4) pouvant être shunté via lesdits éléments en situation de fonctionnement des pompes à chaleur.
